(19) Europäisches Patentamt
European Patent Office
Office européen des brevets

(11) **EP 2 779 524 A1**

(12) **EUROPEAN PATENT APPLICATION**
published in accordance with Art. 153(4) EPC

(43) Date of publication:
**17.09.2014 Bulletin 2014/38**

(51) Int Cl.:
***H04L 9/14*** *(2006.01)*    ***H04L 29/06*** *(2006.01)*

(21) Application number: **12857397.9**

(22) Date of filing: **17.12.2012**

(86) International application number:
**PCT/CN2012/086753**

(87) International publication number:
**WO 2013/087039 (20.06.2013 Gazette 2013/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2011  CN 201110421295**

(71) Applicant: **Huawei Technologies Co., Ltd
Shenzhen, Guangdong 518129 (CN)**

(72) Inventors:
• **XIAO, Fangying
Shenzhen
Guangdong 518129 (CN)**

• **BIAN, Yonggang
Shenzhen
Guangdong 518129 (CN)**
• **ZHANG, Yongjing
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **SECURE DATA TRANSMISSION METHOD, DEVICE AND SYSTEM**

(57)     The present invention provides a method, an apparatus, and a system for securely transmitting data. A method for securely transmitting data is provided, where the method includes: sending, by a user terminal, a resource access request carrying a first authentication header field to a server, where the first authentication header field includes a user identifier and a server identifier; and receiving a request response returned by the server, where the request response includes a second authentication header field and a message body, where the second authentication header field carries a third integrity digest, and the third integrity digest is obtained by the server by performing, after receiving the resource access request, calculation by using a third message-digest algorithm further according to a user password and message content; and the message body carries message content that is encrypted by using a shared key; where the user password is obtained from a storage area of the server according to the user identifier carried by the resource access request, so that M2M transmission based on the CoAP protocol can be performed securely and reliably.

A user terminal sends a resource access request carrying a first authentication header field and a message body — S2001

Receive a request response returned by a server, where the request response is returned by the server after receiving the resource access request and verifying that the resource access request is valid — S2002

FIG. 1b

EP 2 779 524 A1

**Description**

**CROSS-REFERENCE TO RELATED APPLICATIONS**

This application claims priority to Chinese Patent Application No. 201110421295.6, filed with the Chinese Patent Office on December 15, 2011 and entitled "METHOD, APPARATUS, AND SYSTEM FOR SECURELY TRANSMITTING DATA", which is incorporated herein by reference in its entirety.

**TECHNICAL FIELD**

The present invention relates to the communications field, and in particular, to a method, an apparatus, and a system for securely transmitting data.

**BACKGROUND**

The CoAP (Constrained Application Protocol) protocol is applicable mainly in a machine-to-machine (Machine-to-Machine, M2M) scenario, such as a home controller, building automation, intelligent energy, sensor-end network, and the like. In such an environment, these machines have a relatively simple function, generally have an 8-bit processing end and small storage space, and do not support a complex transmission protocol; and a data transmission rate is also low. The CoAP provides a request/response interaction mode and supports embedded resource discovery, which includes key webpage concepts, such as a universal resource identifier (Universal Resource Identifier, URI) and a content type. The CoAP can be easily translated into the HyperText Transfer Protocol (Hyper Text Transfer Protocol, HTTP) for integration into a network.

In the CoAP, a security problem is critical, especially for some sensing data that is confidential data, for example, a physiological characteristic parameter of a person. Moreover, many operations performed on a controller also need to be checked for authorization, and device communication of the CoAP may span across an intermediate node that is not trusted. Therefore, end-to-end CoAP secure data transmission is required. End-to-end secure data transmission includes bidirectional identity authentication on a user terminal and a server, replay attack prevention, and encryption and integrity verification of communications data.

The prior art has no effective method for ensuring separate protection on CoAP protocol and HTTP protocol conversion information and a transmitted message body, resulting in that encryption of a CoAP message and conversion between the CoAP and HTTP protocols cannot be implemented at the same time. Consequently, after a proxy apparatus Proxy is added, the existing CoAP protocol cannot ensure normal transmission under a condition of ensuring encryption security.

**SUMMARY**

A technical problem to be solved by embodiments of the present invention is to provide a method, a user terminal, a server, and a system for securely transmitting data, so that M2M message transmission can be performed securely and reliably.

In order to solve the foregoing technical problem, a first aspect of the embodiments of the present invention provides a method for securely transmitting data, where the method includes:

sending, by a user terminal, a resource access request carrying a first authentication header field to a server, where the first authentication header field includes a user identifier and a server identifier;
receiving a request response returned by the server, where the request response includes a second authentication header field and a message body, where the second authentication header field carries a third integrity digest, where the third integrity digest is obtained by the server by performing, after receiving the resource access request, calculation by using a third message-digest algorithm further according to a user password and message content; and the message body carries message content that is encrypted by using a shared key; where the user password is obtained from a storage area of the server according to the user identifier carried by the resource access request; and decrypting the message body of the request response by using the shared key to obtain the message content, calculating a fourth integrity digest by using a fourth message-digest algorithm according to the message content and the user password, and when the fourth integrity digest is the same as the third integrity digest in the request response, verifying that the request response is valid.

Another aspect provides a method for securely transmitting data, where the method includes:

sending, by a user terminal, a resource access request carrying a first authentication header field and a message body, where the first authentication header field includes a user identifier, a server identifier, and a first integrity digest, where the first integrity digest is obtained by the user terminal by performing calculation by using a first message-digest algorithm according to a user password and message content; and the message body carries message content that is encrypted by using a shared key; and

receiving a request response returned by a server, where the request response is returned by the server after receiving the resource access request and verifying that the resource access request is valid, where the verifying that the resource access request is valid specifically includes: decrypting the message body of the resource access request by using the shared key to obtain the message content, obtaining a corresponding user password from a storage area according to the user identifier in the first authentication header field, calculating a second integrity digest by using a second message-digest algorithm according to the message content and the obtained user password, and when the second integrity digest is the same as the first integrity digest in the resource access request, verifying that the resource access request is valid.

Another aspect provides a user terminal, where the user terminal includes:

a first sending module, configured to send a resource access request carrying a first authentication header field to a server, where the first authentication header field carries a user identifier and a server identifier;

a first receiving module, configured to receive a request response returned by the server and transmit the request response to a first verifying module, where the request response includes a second authentication header field and a message body, where the second authentication header field carries a third integrity digest, and the third integrity digest is obtained by the server by performing, after receiving the resource access request, calculation by using a third message-digest algorithm further according to a user password and message content; and the message body carries message content that is encrypted by using a shared key; where the user password is obtained from a storage area of the server according to the user identifier carried by the resource access request; and

the first verifying module, configured to generate the resource access request and transmit the resource access request to the first sending module, and further configured to obtain the request response from the first receiving module, decrypt the message body of the request response by using the shared key to obtain the message content, calculate a fourth integrity digest by using a fourth message-digest algorithm according to the message content and the user password, and when the fourth integrity digest is the same as the third integrity digest in the request response, verify that the request response is valid.

Another aspect of the present invention provides a server, where the server includes:

a second receiving module, configured to receive a resource access request sent from a user terminal and transmit the resource access request to a second verifying module, where the resource access request carries a user identifier and a server identifier;

the second verifying module, configured to obtain a user password from a storage area of the server according to the user identifier in the resource access request; and calculate a third integrity digest by using a third message-digest algorithm according to the user password and message content, and transmit a request response carrying a second authentication header field and a message body to a second sending module, where the second authentication header field includes the third integrity digest, and the message body includes message content that is encrypted by using a shared key; and

the second sending module, configured to send the request response from the second verifying module to the user terminal.

Another aspect of the present invention provides a user terminal, where the user terminal includes:

a third sending module, configured to send a resource access request from a third verifying module, where the resource access request carries a first authentication header field and a message body, and the first authentication header field carries a user identifier, a server identifier, and a first integrity digest;

the third verifying module, configured to obtain a first integrity digest by performing calculation by using a first message-digest algorithm according to a user password and message content, carry the first integrity digest in the first authentication header field, encrypt the message content by using a shared key, carry the message content in the message body, and send the resource access request carrying the first authentication header field and the message body to the third sending module; and

a third receiving module, configured to receive a request response returned by a server, and transmit the request response to the third verifying module.

Another aspect of the present invention provides a server, where the server includes:

a fourth receiving module, configured to receive a resource access request sent from a user terminal, and transmit the resource access request to a fourth verifying module, where the resource access request includes a first authentication header field, and the first authentication header field carries a user identifier, a server identifier, a message body, and a first integrity digest;

the fourth verifying module, configured to: after obtaining the resource access request from the fourth receiving module, obtain message content that is encrypted by the user terminal and carried in the resource access request, decrypt the message body of the resource access request by using a shared key to obtain the message content, obtain a user password from a storage area according to the user identifier in the first authentication header field, calculate a second integrity digest by using a second message-digest algorithm according to the message content and the obtained user password, and when the second integrity digest is the same as the first integrity digest in the resource access request, verify that the resource access request is valid and transmit a request response to a fourth sending module; and

the fourth sending module, configured to send the request response from the fourth verifying module to the user terminal.

Another aspect of the present invention provides a system for securely transmitting data, where the system includes:

a user terminal, configured to send a resource access request carrying a first authentication header field to a server, where the first authentication header field includes a user identifier and a server identifier; and further configured to receive a request response and decrypt a message body of the request response by using a shared key to obtain message content, calculate a fourth integrity digest according to the message content and a user password, and when the fourth integrity digest is the same as a third integrity digest in the request response, verify that the request response is valid; and

the server, configured to receive the resource access request, obtain the third integrity digest by performing calculation by using a third message-digest algorithm according to the user password and the message content and carry the third integrity digest in a second authentication header field; encrypt the message content by using the shared key and carry the message content in the message body; where the user password is obtained from a storage area of the server by using the user identifier carried by the resource access request, and the message content is obtained by the server after completing an operation of the resource access request; and send the request response carrying the second authentication header field and the message body to the user terminal.

Another aspect of the present invention provides a system for securely transmitting data, where the system includes:

a user terminal, configured to send a resource access request carrying a first authentication header field and a message body, where the first authentication header field includes a user identifier, a server identifier, and a first integrity digest, where the first integrity digest is obtained by the user terminal by performing calculation by using a first message-digest algorithm according to a user password and message content; and the message body carries message content that is encrypted by using a shared key; and further configured to receive a request response returned by a server; and

the server, configured to receive the resource access request sent from the user terminal, decrypt the message body of the resource access request by using the shared key to obtain the message content, obtain the user password from a storage area according to the user identifier in the first authentication header field, and calculate a second integrity digest by using a second message-digest algorithm according to the message content and the obtained user password; and when the second integrity digest is the same as the first integrity digest in the resource access request, verify that the resource access request is valid and return the request response to the user terminal.

According to the embodiments of the solution of the present invention, a message structure is divided into an authentication header field and a message body, where the message body is encrypted by using a key to ensure security of a message, and an integrity digest is calculated and verified to ensure secure transmission of the entire message.

**BRIEF DESCRIPTION OF DRAWINGS**

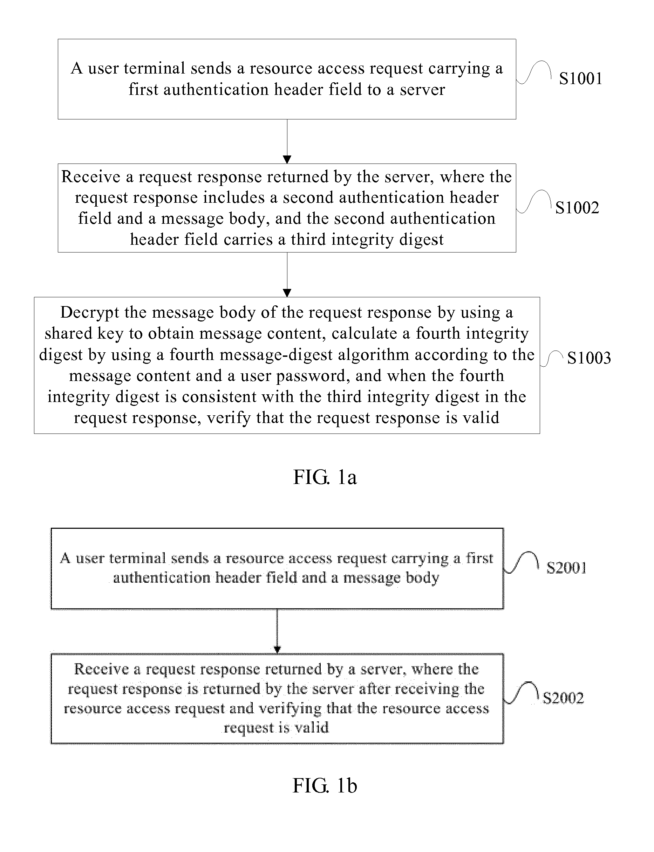

FIG. 1a is a flowchart of a method for securely transmitting data according to the present invention;

FIG. 1b is a flowchart of a method for securely transmitting data according to the present invention;

FIG. 2 is a signaling flowchart of an embodiment of obtaining a resource according to the present invention;

FIG. 3 is a signaling flowchart of an embodiment of updating a resource according to the present invention;

FIG. 4 is a signaling flowchart of an embodiment of creating a resource according to the present invention;

FIG. 5 is a schematic diagram of a user terminal according to the present invention;

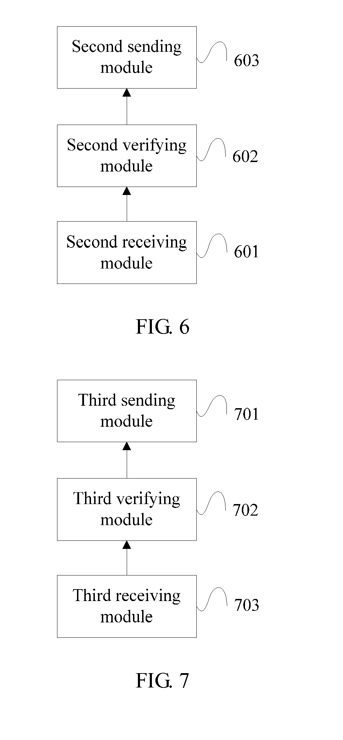

FIG. 6 is a schematic diagram of a server according to the present invention;

FIG. 7 is a schematic diagram of a user terminal according to the present invention;

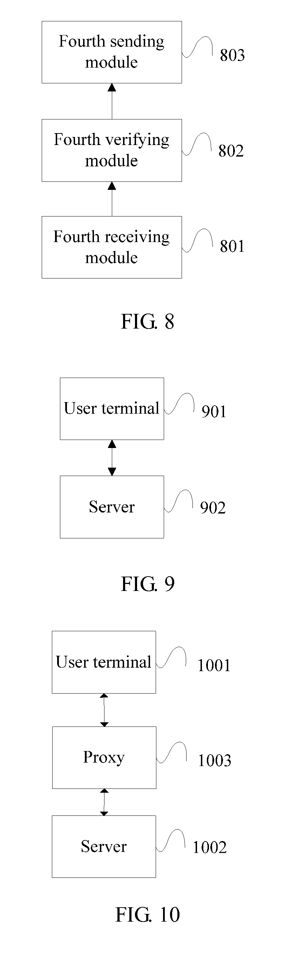

FIG. 8 is a schematic diagram of a server according to the present invention;

FIG. 9 is a schematic diagram of a system for securely transmitting data provided by the present invention; and

FIG. 10 is a schematic diagram of a system for securely transmitting data provided by the present invention.

## DESCRIPTION OF EMBODIMENTS

An implementation process of a method for obtaining a resource according to an embodiment provided by the present invention is specifically as follows:

S1001. A user terminal sends a resource access request carrying a first authentication header field to a server.

Further, the first authentication header field may further include a first digest calculation parameter, where the first digest calculation parameter includes a user identifier and a server identifier, and further includes one or a combination of several of a random identifier, a resource access path, and a negotiated key parameter. The resource access request sent by the user terminal may further include a first integrity digest that is calculated by using a first message-digest algorithm according to a user password and one or a combination of several parameters in the first digest calculation parameter.

The random identifier is temporarily generated by the user terminal each time a resource access request is sent, where the temporarily generated random identifier parameter becomes invalid after a round of resource access request and request response is completed; therefore, a replay attack from a third party on the user terminal can be avoided. A random identifier cnonce may be a random number, a time parameter in a UTC format, or another parameter that provides a non-repeating variation.

Specifically, the first digest calculation parameter further includes a first resource version, and the user terminal may further calculate the first integrity digest by adding the first resource version in the first digest calculation parameter, and send a resource access request carrying the first resource version. The server calculates, after receiving the resource access request, a second integrity digest by using a second message-digest algorithm according to a user password of a storage area of the server and the first digest calculation parameter, where when the first integrity digest is the same as the second integrity digest, the resource access request is valid, and the first message-digest algorithm is the same as the second message-digest algorithm.

An initial value of the first resource version is returned by the server to the user terminal after a resource is created successfully. In an operation of an update resource request of resource content of the same type, a resource version is monotonous, as increase monotonously. By means of adding a resource version to a process of calculating the integrity digest, validity of the resource version is ensured, that is, any tampering will be discovered in a process of integrity verification. On a server, for resource access requests of a same type, for example, update resource requests, a resource uniquely corresponds to one version every time the resource is modified, and a version of a second resource on the server end will be updated after the modification. Therefore, that a third party performs a replay attack on the server by using an intercepted resource access request can be avoided. For the server, in a received valid resource access request, if a version Etag cannot correspond to an Etag of a corresponding resource on the server, the server returns a correct Etag to the user terminal. The resource access request includes but is not limited to an obtain resource request, an update resource request, and a create resource request.

S1002. Receive a request response returned by the server, where the request response includes a second authentication header field and a message body, and the second authentication header field carries a third integrity digest.

The third integrity digest is obtained by the server by performing, after receiving the resource access request, calculation by using a third message-digest algorithm further according to the user password and message content; and the message body carries message content that is encrypted by using a shared key; where the user password is obtained from the storage area of the server according to the user identifier carried in the resource access request; and the message content is obtained after the server performs an operation according to the resource access request. The second authentication header field in the request response further includes a second digest calculation parameter, where the second digest calculation parameter specifically includes one or a combination of several of a user identifier, a random identifier, a resource access path, a server identifier, and a negotiated key parameter, and the second digest calculation parameter may be involved in the third integrity digest.

S1003. Decrypt the message body of the request response by using the shared key to obtain the message content, calculate a fourth integrity digest by using a fourth message-digest algorithm according to the message content and the user password, and when the fourth integrity digest is the same as the third integrity digest in the request response, verify that the request response is valid.

The shared key is negotiated between the server and the user terminal, and may be a universal DH key pair, and may be a key calculated according to a user account and the user password by using a message-digest algorithm, where a specific calculation parameter may further include the resource access path, the server identifier, the random identifier, the first resource version, and the like, and the message-digest algorithm of a key includes but is not limited to DM5, DM8, SHA-1, or the like.

Being valid indicates that a parameter in the resource access request and involved in the calculation of the first integrity digest or a parameter in the request response and involved in the calculation of the third integrity digest is not tampered by a third party. Otherwise, the resource access request received by the server or the request response received by the user terminal is modified in a transmission process, where a specific case may be caused by a reason such as being tampered by a third party or a channel noise.

The first message-digest algorithm, the second message-digest algorithm, the third message-digest algorithm, and the fourth message-digest algorithm use, preferably but are not limited to, a hash function, which specifically may be a hash function-based algorithm such as MD4, Message digest Algorithm 5 (MD5), Secure Hash Algorithm (SHA), or SHA-1. The user password is known to both the user terminal and the server, and is involved in calculation of an integrity digest on both sides to verify a permission of the user terminal and information validity on both sides, where the validity verification includes but is not limited to verifying whether a parameter used for calculating an integrity digest is tampered by a third party.

An embodiment of the present invention provides another method for securely transmitting data, where the method includes:

S2001. A user terminal sends a resource access request carrying a first authentication header field and a message body.

The first authentication header field includes a user identifier, a server identifier, and a first integrity digest, where the first integrity digest is obtained by the user terminal by performing calculation by using a first message-digest algorithm according to a user password and message content, and the message body carries message content that is encrypted by using a shared key.

The first integrity digest is used by a server to, after receiving the resource access request, decrypt the message body of the resource access request by using the shared key to obtain the message content, obtain a corresponding user password from a storage area according to the user identifier in the first authentication header field, calculate a second integrity digest by using a second message-digest algorithm according to the message content and the obtained user password, and when the second integrity digest is the same as the first integrity digest in the resource access request, verify that the resource access request is valid.

The first authentication header field may further include a first digest calculation parameter, where the first digest calculation parameter includes the user identifier and the server identifier, and further includes one or a combination of several of a random identifier, a resource access path, and a negotiated key parameter.

Further, the user terminal obtains the first integrity digest by performing calculation by using the first message-digest algorithm according to the user password, the message content, and the first digest calculation parameter. The server calculates the second integrity digest by using the second message-digest algorithm according to the message content, the user password, and the first digest calculation parameter, and when the second integrity digest is the same as the first integrity digest in the resource access request, verifies that the resource access request is valid.

S2002. Receive a request response returned by the server, where the request response is returned by the server after receiving the resource access request and verifying that the resource access request is valid.

The server decrypts the message body of the resource access request by using the shared key to obtain the message content, obtains the corresponding user password from the storage area according to the user identifier in the first authentication header field, calculates the second integrity digest by using the second message-digest algorithm according to the message content and the obtained user password, and when the second integrity digest is the same as the first integrity digest in the resource access request, verifies that the resource access request is valid.

The request response may further include a second authentication header field, where the second authentication header field further includes a second digest calculation parameter, and the second digest calculation parameter specifically includes one or a combination of several of a user identifier, a random identifier, a resource access path, a server identifier, and a negotiated key parameter. The server obtains a third integrity digest by performing calculation by using a third message-digest algorithm according to the user password and the second digest calculation parameter.

Further, the user terminal obtains, after receiving the request response, a fourth integrity digest by performing calculation by using a fourth message-digest algorithm according to the user password and the second digest calculation parameter, where when the third integrity digest is the same as the fourth integrity digest, the request response is valid.

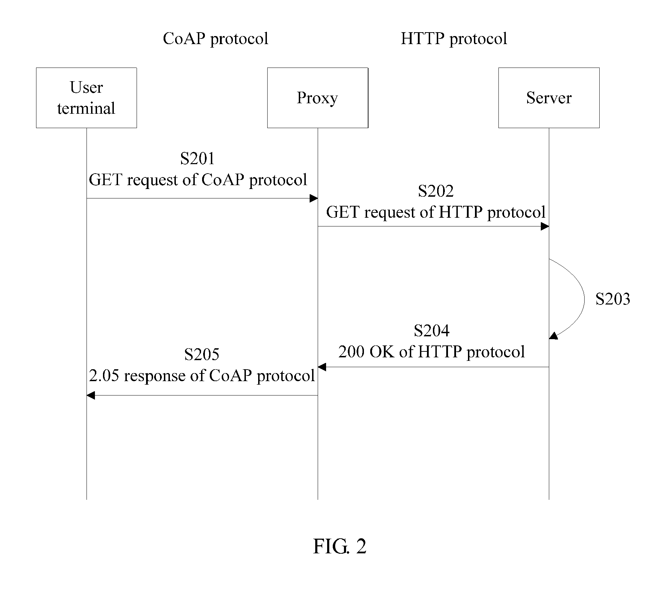

The present invention provides an embodiment for obtaining a resource. In this embodiment, a resource access request may be an obtain resource request. A user terminal generates, when initiating an obtain resource request GET, a random identifier cnonce in a UTC format, and carries the random identifier in a first authentication header field of the GET request for identifying a replay attack at a server end. The server and the user terminal involve in calculation of an integrity digest by using a user name and a user password to perform bi-directional identity verification, where a calculation method may be based on a hash function. A specific message digest algorithm includes but is not limited to a MD5, a SHA, or SHA-1. A DH negotiated key parameter is carried in the first authentication header field of the GET request, and a shared key may be a generated DH key. A flowchart thereof is shown in FIG. 2.

S201. A user terminal sends a GET request of a CoAP protocol to a proxy, where the request carries a first authentication header field of an identifier Authorization, and a first digest calculation parameter includes a user identifier Digest username, a server identifier realm, a resource access path uri, and a random identifier cnonce. Further, the first digest calculation parameter may further include a proxy identifier Uri-Host. The first authentication header field further includes, besides including the first digest calculation parameter, a first integrity digest response for completing the GET request and authorization negotiation of a server. Specifically, a GET request is as follows:

```
GET (T=CON, Code=1, MID=0x7d32)
Uri-Host: exampleproxy.com,
Authorization: Digest username="sensor_1",
realm= "example.com",
uri="example.com/applications/firstApp/lastmodifiedTime",
cnonce=" 20111128T152000Z",
response="2a69fd5ae49cb3ad3a7094de50f7ca4f',
g=5,
p=97,
kc=50,
```

where T=CON represents a message that needs to be confirmed, Code=1 represents a GET request, MID=0x7d32 is a message identifier, g and p are parameters required for DH key calculation, and kc is obtained by the user terminal by performing calculation according to a DH key formula gx Mod p, where x is generated by negotiation by the user terminal and the server, is stored on the user terminal, and forms a private parameter pair of a DH key together with y at a server end. In order to prevent an attack of a third party, where the third party is not the legal user terminal and the server, the three values may also be used as digest calculation parameters in calculation of an integrity digest. If the user terminal and the server have a set of fixed values of g and p, it is unnecessary to carry the parameters g and p. The random identifier cnonce is generated by the user terminal according to the UTC format and is temporarily stored on the user terminal, and meanwhile is also used as a send time parameter. response is the first integrity digest generated by the user terminal. The user terminal exchanges required parameters g, p, and kc and the random identifier cnonce as well as a user name and a password by using a DH key for a combination, and calculates an integrity digest by using a hash operation, such as MD5, where a method for calculating an integrity digest may also be but is not limited to SHA or SHA-1. response is specifically calculated as follows:

$$\text{Response} = KD \left( H(A1), \, unq(cnonce)":"g":"p":"kc":"H(A2) \right)$$

where A1 is unq(username) ":" unq(realm) ":" passwd, and A2 is Method ":" uri.

In the formula above, an expression of a function KD is KD(secret, data) = H(concat(secret, ":", data)), where a concat(secret, ":", data) function completes a combination of secret and data in a combining or inserting manner. unq(X) represents obtaining content corresponding to an identifier X, for example, X is username, and specifically username="sensor_1", accordingly, unq(username) = sensor_1. H(X) represents a hash operation performed on X. Preferably, an MD5 method is used. Method represents that a request method is specifically GET. passwd is a user password. Matching and a sorting combination of all variables are not limited to that illustrated in this embodiment.

S202. The proxy receives the GET request from the user terminal, obtains, according to the user identity sensor_1 and the server identifier examplehost@host.com in the resource access request, a protocol supported by the user terminal and the server; and completes protocol conversion of the resource access request, so that the original CoAP GET request is converted into an HTTP GET request and the HTTP protocol is supported by the server, which is specifically as follows:

GET example.com/applications/firstApp/lastmodifiedTime HTTP/1.1

Authorization: Digest username="sensor_1",
realm= "example.com",
uri="example.com/applications/firstApp/lastmodifiedTime",
cnonce="20111128T152000Z",
response="2a69fd5ae49cb3ad3a7094de50f7ca4f',
g=5,
p=97,
kc=50,

The proxy sends the converted HTTP GET request to the server.

S203. The server, after receiving the converted HTTP GET request from the proxy, first determines, according to a send time variable in the random identifier cnonce in the first authentication header field, whether the received GET request is a request within a valid period, records the request in a temporary expiration table if the request expires, and when the expired GET request is received again and it is checked against the temporary expiration table that the request is received for the second time, sends an alarm to the user terminal indicating that the message may be intercepted by a third party and takes a corresponding measure.

When it is determined that the request is within the valid period, a user password stored on the server are queried according to the user identity sensor_1 also get the first digest calculation parameter , and a second integrity digest is calculated to verify the user terminal, where a second message-digest algorithm of the second integrity digest is the same as a first message-digest algorithm of the user terminal. When it is verified that the first integrity digest is the same as the second integrity digest, the server further calculates ks=gy Mod p, and a key for encryption is key=(kc)y Mod p, where y is generated by negotiation by the user terminal and the server, is stored on the server, and forms a private parameter pair of a DH key with y on the user terminal. key is used to encrypt message content to be sent by the server as a message body of a response. A message header is as follows:

HTTP/1.1 200 OK
Authorization-info: Digest username="sensor_1",
realm="example.com",
uri="example.com/applications/firstApp/lastmodifiedTime",
cnonce="20111128T152000Z",
response="ad3c5fe472afd88cee5fa6c0a00dac2a",
ks=44,

A third message-digest algorithm of a third integrity digest response in the message header is as follows:

KD (H(A3), unq(cnonce) ":"ks":"H(A4) ":"H(data))
where in the second digest calculation parameter, A3 is unq(username-value) ":" unq(realm-value) ":"passwd, A4 is uri, and data is the message content to be sent by the server. The server returns an HTTP 200 OK response to the proxy.

S204. The proxy converts the HTTP 200 OK response into a CoAP 2.05 response including the following Authorization option, and sends the CoAP 2.05 response to the user terminal:

2.05 Content (T=ACK, Code=69, MID=0x7d32)
Authorization-info: Digest username="sensor_1",
realm="example.com",
uri= "example.com/applications/firstApp/lastmodifiedTime",
cnonce="20111128T152000Z",
response="ad3c5fe472afd88cee5fa6c0a00dac2a",
ks=44,

S205. The user terminal, after receiving the request response from the proxy, first verifies whether the random identifier cnonce carried in the request response is the same as a value of the random identifier cnonce temporarily stored on the user terminal; if they are the same, deletes the temporarily stored cnonce; further calculates a key=(ks)xMod p; decrypts the message body by using the calculated shared key key to obtain the message content data; and then performs calculation of a fourth integrity digest according to the third message-digest algorithm which is used by the server end to calculate the third integrity digest, where the formula is as follows:

8

Response_out = KD (H(A3), unq(cnonce) ":"ks":"H(A4) ":"H(data))

The Response_out value is compared with the response value in the received request response to determine whether the response is complete and secure. If the Response_out value is different from the response value in the received request response, it indicates that the request response is tempered by a third party, and the GET request is ended or steps S201 to S205 are repeated to obtain a resource again; and if they are the same, an operation of obtaining a resource is further completed.

In the process above, in this embodiment, because the third party does not know values of private parameters x and y that form the key pair of the two parties, the user terminal and the server, the third party cannot know a final DH key, hence cannot obtain the message content. Even when the message content is cracked, because the user password, as a necessary parameter for calculating an integrity digest, is not known to the third party, even if the third party obtains modification performed on any parameter of a message in transmission, a difference between an integrity digest calculated by a receiving end and an integrity digest carried in the transmitted message is caused, which will be detected by the user terminal or the server. A data character is added so that an obtain resource request uniquely corresponds to a request response and a request response repeatedly sent will not processed by the user terminal because cnonce is verified to be inconsistent. Therefore, security and integrity of a message between the user terminal and the server are ensured.

In another embodiment for obtaining a resource according to the present invention, the shared key may be obtained by performing calculation by using a message-digest algorithm and by using a user password that is known to the user terminal and the server but is unknown to the third party. In order to improve complexity and security of a key, a user identity and a resource access path may be further added as parameters for calculating the shared key. A message-digest algorithm of a key may use but is not limited to MD5, where a formula is as follows:

key= KD (H(B1), unq(cnonce)":"H(B2)),

where B1 is unq(username) ":" unq(realm) ":"passwd, and B2 is uri. The server uses the shared key key to encrypt data message content as the message body of the request response. Authorization of the resource access request identifies the first authentication header field, which is correspondingly modified as follows:

Authorization: Digest username="sensor_1",
realm=" example.com ",
uri=" example.com/applications/firstApp/lastmodifiedTime ",
cnonce="xxx",
response="xxx",

A formula for calculating a value of the integrity digest response is as follows:

where after the formula for the terminal to calculate an integrity digest uses the shared key that is calculated by using a password, because transmission of the shared key parameter is eliminated, the corresponding first message-digest algorithm is modified as follows:

KD(H(A5), unq(cnonce)":"H(A6))

In the first digest calculation parameter, A5 is unq(username) ":" unq(realm) ":" passwd, and A6 is Method ":" uri, where username is a user identity, realm is a server identifier, passwd is a user password, Method is a method of a resource access request, and uri is an address of a requested resource.

The method of this embodiment eliminates transmission of a negotiated key parameter, so that a message header field occupies less space; moreover, a combination of a user password and a header field parameter may be used to obtain a shared key by using a hash algorithm. This improves confidentiality degree of information.

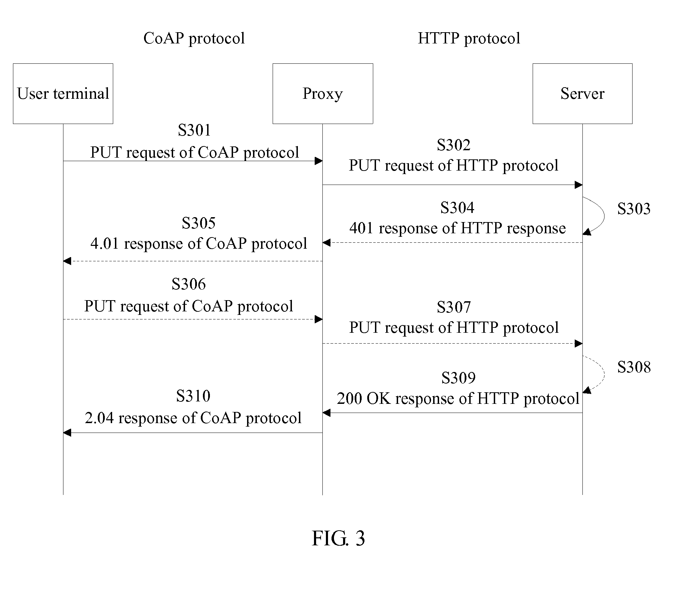

The present invention provides an embodiment for updating a resource. In this embodiment, a resource access request is specifically an update resource request. Each time a user terminal initiates an update resource request PUT, the user terminal generates a different random identifier cnonce and carry the random identifier in a first authentication header field of the PUT request, which is used to identify a replay attack on a server side. That is, cnonce is dynamically variable. A different cnonce is used in a sent the update resource request, and a cnonce value carried in a request response sent by the server is obtained from the received resource access request. The server and the user terminal involve in calculation of calculation of an integrity digest by using a user name and a user password to perform bi-directional identity verification, where a calculation method includes but is not limited to MD5, SHA, or SHA-1. The user terminal generates an encryption key by using information such as the user name and the user password and encrypts data, where a flowchart thereof is shown in FIG. 3.

S301. A user terminal initiates a CoAP PUT request, where the request carries a first authentication header field of an identifier Authorization for completing the PUT request and authorization negotiation of a server, where a first digest calculation parameter includes a user identifier Digest username, a server identifier realm, a resource access path uri, a random identifier cnonce, and a resource version Etag. Further, the first digest calculation parameter may further include a proxy identifier Uri-Host. The first authentication header field further includes, besides including the first digest calculation parameter, a first integrity digest response. Specifically, a message header field of the CoAP PUT request is as follows:

```
PUT (T=CON, Code=3, MID=0x8a54)
Uri-Host: exampleproxy.com
Authorization: Digest username="sensor_1",
realm=" example.com ",
Etag="xxx",
uri="example.com/applications/firstApp/lastmodifiedTime",
cnonce="cad081e0f082dfd2f a751c10cb1b0c42a",
response="xxx",
```

A first message-digest algorithm of the first integrity digest response is KD ( H(A1), H(A2)":"H(data)), where A1 is unq(username) ":" unq(realm)":"unq(Etag) ":"passwd, A2 is Method ":" uri, and data is data before encryption, that is, message content of the update resource request. Meanwhile, a message-digest algorithm of a key of the user terminal according to a user identity username and a user password passwd is:

```
key= KD(H(A3), unq(cnonce)":"H(A4))
```
where A3 is unq(username) ":" unq(realm)":"Etag":"passwd, and the user terminal encrypts the message content by using key as a message body of the PUT request.

S302. The proxy receives the PUT request from the user terminal, obtains, according to the user identity sensor_1 and the server identifier examplehost@host.com in the resource access request, a protocol supported by the user terminal and the server, and completes protocol conversion of the resource access request, so that the original CoAP PUT request is converted into an HTTP PUT request supporting the HTTP protocol of the server. The proxy sends the converted HTTP PUT request to the server.

S303. The server, after receiving the HTTP PUT request forwarded by the proxy, verifies consistency between a first resource version Etag for updating carried in the first authentication header field of the received PUT request and an original second resource version Etag of the server, where the consistency may be that after the server updates a resource each time, a corresponding resource version is added automatically by 1 to generate a third resource version Etag; then, when an updated resource is received subsequently, verifies that a resource version Etag to be updated and the original resource version Etag of the server are the same, where if they are the same, it indicates that the Etag carried in the update resource request is valid, thereby limiting a replay attack of a third party; further, in a condition that the first resource version Etag meets the consistency: queries, according to the user identity username, a user password stored on the server; by using a message-digest algorithm of a key that is the same as that of the user terminal according to realm and uri in the first authentication header field in the HTTP PUT request:

```
key= KD(H(A3), unq(cnonce)":"H(A4))
```
calculates a shared key key, and decrypts the message body of the HTTP PUT request by using key to obtain the message content; and calculates, according to the message content, a second integrity digest by using a second message-digest algorithm:

```
KD (H(A1), H(A2)":"H(data)),
```

In a second digest calculation parameter, A1 is unq(username) "." unq(realm)":"unq(Etag) ":"passwd, A2 is Method ":" uri, and data is data before encryption, where the second integrity digest obtained by calculation is compared with the first integrity digest response carried in the first authentication header field of Authorization to verify integrity of the PUT request message. If a comparison result indicates that they are the same, the server updates the resource of the server by using the message content, which is specifically replacing the resource stored on the server with the message content decrypted from the resource update request; adds 1 to a version of the replaced resource, that is, generates a third resource version; and then, performs S309. If the comparison result indicates that they are different, the server returns an authentication failure unauthorization message. If a result indicating inconsistency is obtained when verifying the Etag, the server further performs decryption described above, and when integrity is verified, directly performs S304.

S304. The server returns an HTTP 401 response, where the response carries the second resource version Etag, the third integrity digest, and the second digest calculation parameter, where the second resource version Etag is used to instruct the user terminal to send a resource of a correct version; the third digest calculation parameter further includes, besides including the second resource version, the user identifier, the user password, the server identifier, and the random identifier, and obtains the third integrity digest by performing calculation by using the third message-digest algorithm.

S305. The proxy converts the HTTP 401 response into a CoAP 4.01 response and sends the CoAP 4.01 response to the user terminal.

S306. The user terminal, after completing validity verification on the CoAP 4.01 response, resets a second authentication header field of the resource access request according to a value of the second resource version Etag in the request response, and re-initiates a CoAP PUT request, where a process of initiating a PUT request is the same as step S301.

S307. The proxy receives the CoAP PUT request from the user terminal, and sends an HTTP PUT request to the server after protocol conversion.

S308. The server receives the PUT request carrying a new Etag value, where a specific execution operation is the same as that in step S303.

S309. The server returns an HTTP 200 OK response, where the response carries an updated third resource version Etag, and meanwhile carries server verification information by using a second authentication header field of Authentication-info, which includes the second digest calculation parameter: the user identifier Digest username, the server identifier realm, the resource access path uri, and the random identifier cnonce. Authentication-info carries the following information:

Authentication-info: Digest username="sensor_1",
realm="example.com",
Etag="xxx",
uri=" example.com/applications/firstApp/lastmodifiedTime ",
cnonce="61cd8ad85d002c07fd2f0bbe02f1b10c1",
response="xxx"

The message content before encryption is also used as a third integrity digest calculation parameter, that is, the third message-digest algorithm of the third integrity digest is:

KD (H(A3), unq(cnonce)":"H(A4)":"H(data)),

In the third digest calculation parameter, A1 is unq(username) ":"unq(realm) ":"Etag":"passwd, A2 is uri, the message content data is a message body that is to be sent and is generated by encryption by using the shared key key.

S310. The proxy converts the 200 OK response of the HTTP protocol into a CoAP 2.04 request response of the CoAP protocol, and forwards the CoAP 2.04 request response to the user terminal.

The user terminal first verifies whether the random identifier cnonce carried in the request response is consistent with a value of the random identifier cnonce that is temporarily stored by the user terminal; if they are the same, deletes the temporarily stored cnonce; calculates the shared key by using the message-digest algorithm of a key and by using the user password; further uses the shared key to decrypt the message body to obtain the message content; and calculates a fourth integrity digest by using a formula the same as that for the server to calculate the third integrity digest. The user terminal compares the fourth integrity digest obtained by calculation with the third integrity digest carried in the request response; when the two are the same, completes a process of updating a resource; and when the two are different, it may be inferred that the request response is tampered by a third party. Then the user terminal re-starts the update process from S301 or ends the process according to a setting.

In this embodiment, a shared key is generated by using a message-digest algorithm and by using a user identifier and a user password, so that less data is transmitted in a message, and confidentiality degree of the key is improved. In this embodiment, calculation formulas for calculating a key and an integrity digest are all preferred solutions. In an actual operation, on a precondition that it is ensured that the user password is used as a necessary parameter, other data that needs to be protected or data with algorithm complexity increased may be introduced, and a data combination of the parameters is also variable. Because a resource version is introduced, a server end also has capability of preventing a replay attack.

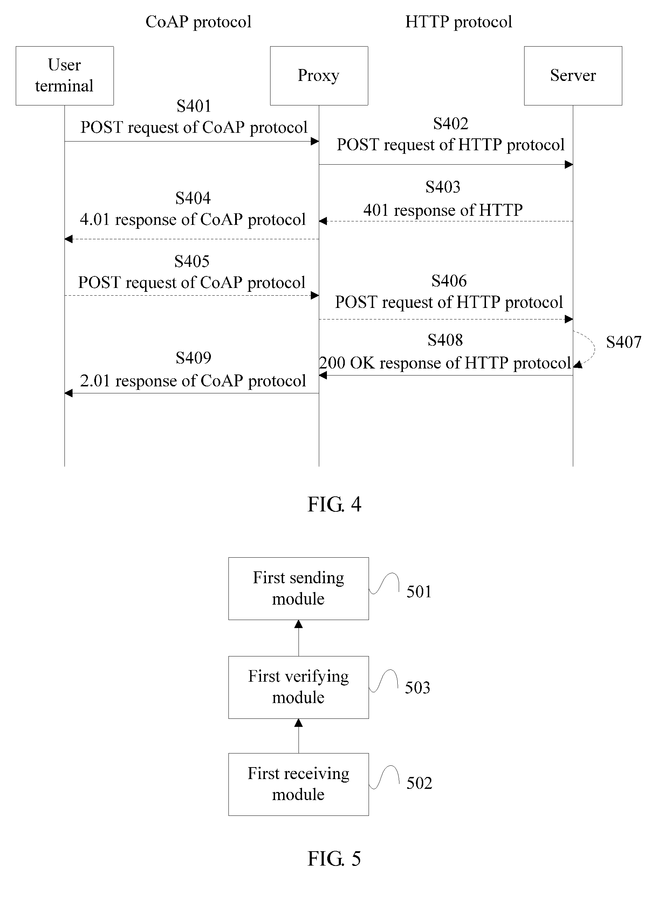

In an embodiment of creating a resource according to the present invention, in this embodiment, a resource access request is specifically a create resource request. Each time a user terminal initiates a create resource request POST, the user terminal randomly generates a data character cnonce, and carries the data character cnonce in a first authentication header field of the POST request for identifying a replay attack on a server side. That is, cnonce is dynamically variable, and a temporarily generated cnonce is used when an update resource request is sent. In such a case, the server no longer uses an Etag that is used in the foregoing embodiments to perform replay attack prevention, but implements replay attack prevention by using a random identifier nonce of the server that is similar to cnonce. The server and the user terminal involve in calculation of an integrity digest by using a user name and a user password to perform identity verification, where a calculation method includes but is not limited to MD5, SHA, or SHA-1. The user terminal generates an encryption key by using information such as the user name and a password and encrypts data, where a flowchart thereof is shown in FIG. 5.

S401. A user terminal initiates a CoAP POST request, which carries a user identity, a server identifier, and a proxy identifier, where a random identifier cnonce is a random identifier generated by the user terminal and is temporarily stored on the user terminal.

S402. A proxy receives the CoAP POST request from the user terminal, completes protocol conversion of the resource access request according to the user identity sensor_1 and the server identifier example.com in the resource access request, so that the original CoAP POST request is converted into a request that supports the HTTP protocol that is supported by the server.

S403. The server receives the POST message that is forwarded from the proxy; because the user terminal does not a nonce value in advance, a nonce parameter carried by the POST message cannot be verified by the server, therefore, the serve returns an HTTP 401 response, which carries a second authentication header field of Authentication, where a parameter is as follows:

> Authentication-info: Digest username="sensor_1",
> realm=" example.com ",
> uri=" example.com/applications/firstApp/lastmodifiedTime ",
> cnonce="xxx",
> nonce="02df8a71 ed2fbd0c026dcb 1 f08510c15b",
> g=xxx,
> p=xxx,
> ks=xxx,
> where g and p are parameter required for calculating a DH key; $ks=g^y Mod\ p$; y is generated by negotiation by the user terminal and the server, is stored on the server, and forms a private parameter pair of the DH key with x on a client. In order to prevent an attack from a third party, where the third party is not the legal user terminal and the server to modify p, g, and ks, the three values may also be added to calculation of an integrity digest as parameters.

S404. The proxy converts the HTTP 401 response into a CoAP 4.01 response and forwards the CoAP 4.01 response to the user terminal. The user terminal, after receiving the response of the server and after completing verification of an integrity digest, further calculates a shared key $key=(ks)^x Mod\ p$, where x is generated by negotiation by the user terminal and the server, is stored on the user terminal, and forms a private parameter pair of the DH key with y on the server end, and the shared key is used to encrypt data.

S405. The user terminal re-initiates a CoAP POST request, and uses encrypted data as a message body of the POST request. The POST request carries an Authorization option, where a parameter is as follows:

> Authorization: Digest username=" sensor_1",
> realm=" example.com ",
> uri=" example.com/applications/firstApp/lastmodifiedTime ",
> nonce=" 02df8a71ed2fbd0c026dcb1f08510c15b ",
> cnonce="xxx",
> response="xxx",
> kc=xxx
> kc is obtained by calculation by the user terminal according to a DH key formula $g^x Mod\ p$. A first message-digest algorithm of a first integrity digest response is as follows:

> KD (H(A1), unq(nonce)":"unq(cnonce)":"kc":"H(A2) ":"H(data))

In a first digest calculation parameter, A1 is unq(username) ":" unq(realm) ":"passwd, A2 is Method ":" uri, and data is message content before encryption.

406. The proxy converts the CoAP POST request into an HTTP POST request and forwards the HTTP POST request to the server.

407. The server, after receiving the POST request retransmitted by the user terminal, where the POST request carries a first resource version, calculates a shared key key=(kc)yMod p and decrypts the message body of the POST request by using the shared key key to obtain message content; then, calculates a second integrity digest by using a second message-digest algorithm according to the first digest calculation parameter: the message content, username, realm, passwd, and uri; and verifies that the first integrity digest is the same as the second integrity digest, indicating that the POST request is verified, that is, no modification is made by a third party, where the second message-digest algorithm is the same as the first message-digest algorithm. When the POST request is verified, the server creates a resource according to the message content and the uri; if the POST request carries the first resource version, preferably, verifies consistency between the first resource version and a second resource version stored by the server, and generates a third resource version is generated after creating the resource.

408. The server returns an HTTP 200 OK response, which includes a resource access address uri of the created resource; and when the third resource version Etag is available, further, uses the Etag as one second digest calculation parameter to involve in calculation of a third integrity digest and carries the Etag in the request response HTTP 200 OK.

S409. The proxy converts the HTTP 200 OK reply into a CoAP 2.01 reply and forwards the CoAP 2.01 reply to the user terminal. Firstly, the proxy verifies whether cnonce carried in the request response is the same as a value of cnonce that is temporarily stored by the user terminal; if they are the same, deletes the temporarily stored cnonce; further, generates a shared key by using a negotiated key parameter kc to decrypt the message body; calculates a fourth integrity digest by using a fourth message-digest algorithm according to the received second digest calculation parameter and the user password; and when it is verified that the fourth integrity digest is the same as the third integrity digest, completes a creating process.

In this embodiment, nonce is used to implement replay attack prevention of a server end, where the nonce may specifically be one or a combination of several of an IP address of a user terminal, a time parameter in a UTC format, and a private key of a server. Compared with a replay attack prevention manner of an Etag, steps S401 to S404 are added in a signaling transmission process; however, there is no special limit on a storing manner of a resource version, which improves an application scope under a circumstance of a loss in execution efficiency.

A user terminal provided by the present invention includes:

a first sending module 501, configured to send a resource access request carrying a first authentication header field to a server, where the first authentication header field carries a user identifier and a server identifier;

a first receiving module 502, configured to receive a request response returned by the server and transmit the request response to a first verifying module 503, where the request response includes a second authentication header field and a message body, and the second authentication header field carries a third integrity digest; and

the first verifying module 503, configured to generate the resource access request and transmit the resource access request to the first sending module 501, and further configured to obtain the request response from the first receiving module 502, decrypt the message body of the request response by using a shared key to obtain message content, calculate a fourth integrity digest by using a fourth message-digest algorithm according to the message content and a user password, and when the fourth integrity digest is the same as the third integrity digest in the request response, verify that the request response is valid. The first authentication header field carried by the resource access request further includes a first digest calculation parameter, where the first digest calculation parameter includes the user identifier and the server identifier, and further includes one or a combination of several of a random identifier, a resource access path, and a negotiated key parameter.

Further, the first verifying module 503 calculates a first integrity digest by using a first message-digest algorithm according to the user password and the first digest calculation parameter, and carries the first integrity digest in the resource access request, so that the server can calculate a second integrity digest by using a second message-digest algorithm according to the user password and the first digest calculation parameter, where the first message-digest algorithm is the same as the second message-digest algorithm, and when the first integrity digest is the same as the second integrity digest, verify that the resource access request is valid.

The second authentication header field further includes a second digest calculation parameter, where the second digest calculation parameter specifically includes one or a combination of several of a user identifier, a random identifier, a resource access path, a server identifier, and a negotiated key parameter.

The first verifying module 503 is further configured to calculate the fourth integrity digest by using the fourth message-digest algorithm according to the user password, the message content, and the second digest calculation parameter.

When the resource access request further carries a random identifier, the first verifying module 503 is further configured to transmit the resource access request carrying the random identifier to the first sending module 501, and store the random identifier; and when the request response from the first receiving module 502 is further received, verifies whether the stored random identifier and the random identifier in the second digest calculation parameter carried by the request response is the same, and if they are the same, verifies that the request response is not repeatedly sent.

The first sending module 501, the first receiving module 502, and the first verifying module 503 of the user terminal are further configured to execute a procedure of a corresponding function in the foregoing method embodiments, which is not described repeatedly herein.

A server provided by the present invention includes:

a second receiving module 601, configured to receive a resource access request sent from a user terminal and transmit the resource access request to a second verifying module 602, where the resource access request carries a user identifier and a server identifier;

the second verifying module 602, configured to obtain a user password from a storage area of the server according to the user identifier in the resource access request, calculate a third integrity digest by using a third message-digest algorithm according to the user password and message content, and transmit a request response carrying a second authentication header field and a message body to a second sending module 603, where the second authentication header field includes the third integrity digest, and the message body includes message content that is encrypted by using a shared key; and

the second sending module 603, configured to send the request response from the second verifying module 602 to the user terminal.

The first authentication header field carried by the resource access request further includes a first digest calculation parameter, where the first digest calculation parameter includes the user identifier and the server identifier, and further includes one or a combination of several of a random identifier, a resource access path, and a negotiated key parameter. The second verifying module 602 calculates a second integrity digest by using a second message-digest algorithm according to the user password and the first digest calculation parameter, and when the first integrity digest in the resource access request is the same as the second integrity digest, verifies that the resource access request is valid.

The second authentication header field in the request response further includes a second digest calculation parameter, where the second digest calculation parameter specifically includes one or a combination of several of a user identifier, a random identifier, a resource access path, a server identifier, and a negotiated key parameter.

The second verifying module 602 is further configured to calculate the third integrity digest by using the third message-digest algorithm according to the user password, the message content, and the second digest calculation parameter.

When the first digest calculation parameter further carries a first resource version, the second verifying module 602 is further configured to compare whether the first resource version is the same as a second resource version stored locally on the server, where if they are the same, the resource access request is not repeatedly sent; after it is verified that the resource access request is valid, transmit the request response to the second sending module 603, where the request response further carries the first resource version.

The second sending module 603, the second receiving module 601, and the second verifying module 602 of the server are further configured to execute a procedure of a corresponding function in the foregoing method embodiments, which is not described repeatedly herein.

A user terminal provided by the present invention includes:

a third sending module 701, configured to send a resource access request from a third verifying module 702, where the resource access request carries a first authentication header field and a message body, and the first authentication header field carries a user identifier, a server identifier, and a first integrity digest;

the third verifying module 702, configured to obtain a first integrity digest by performing calculation by using a first message-digest algorithm according to a user password and message content, carry the first integrity digest in the first authentication header field, encrypt the message content by using a shared key, carry the message content in the message body, and send the resource access request carrying the first authentication header field and the message body to the third sending module 701. The third integrity digest is obtained by the server by performing, after receiving the resource access request, calculation by using a third message-digest algorithm further according to the user password and the message content. The message body carries message content that is encrypted by using a shared key, and the user password is obtained from a storage area of the server according to the user identifier carried by the resource access request; and a third receiving module 703, configured to receive a request response returned by a server, and transmit the request response to the third verifying module 702.

The request response includes a second authentication header field, where the second authentication header field further includes a second digest calculation parameter, and the second digest calculation parameter specifically includes one or a combination of several of a user identifier, a random identifier, a resource access path, a server identifier, and a negotiated key parameter.

Further, the third verifying module 702 obtains, after receiving the request response, a fourth integrity digest by performing calculation according to a fourth message-digest algorithm, and when the third integrity digest in the request response is the same as the fourth integrity digest, verifies that the request response is valid.

The first authentication header field further includes a first digest calculation parameter, where the first digest calculation parameter includes the user identifier and the server identifier, and further includes one or a combination of several of a random identifier, a resource access path, and a negotiated key parameter.

The third verifying module 702 is further configured to obtain the first integrity digest by performing calculation by using the first message-digest algorithm according to the user password, the message content, and the first digest calculation parameter, and carry the first integrity digest in the resource access request, so that the server further, after receiving the resource access request carrying the first integrity digest, calculates a second integrity digest by using the user password, the message content, and the first digest calculation parameter and by using a second message-digest algorithm, and when the first integrity digest is the same as the second integrity digest, verifies that the resource access request is valid, where the first message-digest algorithm is the same as the second message-digest algorithm. The third verifying module 702 is further configured to generate and store a random identifier, and further receive a request response that is from the server and forwarded by the third receiving module 703, where the random identifier in the second digest calculation parameter in the request response is obtained by the server from the first digest calculation parameter; and the third verifying module 702 verifies whether the stored random identifier is the same as the random identifier in the second digest calculation parameter carried by the request response, and if they are the same, determines that the request response is not repeatedly sent. When the first digest calculation parameter further includes a first resource version, the third verifying module 702 further calculates the first integrity digest by using the first resource version of the first digest calculation parameter, where an initial value of the first resource version is returned by the server to the user terminal after a resource is successfully created; and the user terminal stores, when it is verified that the request response is valid, a third resource version carried in the request response returned by the server.

A server provided by the present invention includes:

a fourth receiving module 801, configured to receive a resource access request sent from a user terminal, and transmit the resource access request to a fourth verifying module 802, where the resource access request includes a first authentication header field, and the first authentication header field carries a user identifier, a server identifier, a message body, and a first integrity digest;

the fourth verifying module 802, configured to: after obtaining the resource access request from the fourth receiving module 801, obtain message content that is encrypted by the user terminal and carried in the resource access request, decrypt the message body of the resource access request by using a shared key to obtain the message content, decrypt the message body of the resource access request by using a shared key to obtain the message content, obtain a user password from a storage area according to the user identifier in the first authentication header field, calculate a second integrity digest by using a second message-digest algorithm according to the message content and the obtained user password, and when the second integrity digest is the same as the first integrity digest in the resource access request, verify that the resource access request is valid and transmit a request response to a fourth sending module 803; and

the fourth sending module 803, configured to send the request response from the fourth verifying module 802 to the user terminal.

The first authentication header field carried by the resource access request further includes a first digest calculation parameter, where the first digest calculation parameter includes the user identifier and the server identifier, and further includes one or a combination of several of a random identifier, a resource access path, and a negotiated key parameter.

The fourth verifying module 802 is further configured to calculate the second integrity digest by using the second message-digest algorithm according to the message content, the user password, and the first digest calculation parameter, and when the first integrity digest is the same as the second integrity digest, verify that the resource access request is valid, where the first message-digest algorithm is the same as the second message-digest algorithm.

Further, the request response carries a second authentication header field, where the second authentication header field further includes a second digest calculation parameter, and the second digest calculation parameter specifically includes one or a combination of several of a user identifier, a random identifier, a resource access path, a server identifier, and a negotiated key parameter. The fourth verifying module 802 is further configured to calculate a third integrity digest by using a third message-digest algorithm according to the user password and the second digest calculation parameter, and carry the third integrity digest in the request response, so that the user terminal may calculate a fourth integrity digest by using a fourth message-digest algorithm according to the user password and the second digest calculation parameter, and when the fourth integrity digest is the same as the third integrity digest, verify that the request response is valid. When the first digest calculation parameter further carries a first resource version, the fourth verifying module 802 is further configured to compare whether the first resource version is the same as a second resource version stored locally on the server, where if they are the same, the resource access request is not repeatedly sent; after it is verified that the resource access request is valid, complete an operation of the resource access request, update the second resource version to a third resource version, and further calculate the third integrity digest by using the third resource version.

A system for securely transmitting data provided by the present invention includes:

a user terminal 901, configured to send a resource access request carrying a first authentication header field to a server 902, where the first authentication header field includes a user identifier and a server identifier, and further configured to receive a request response and decrypt a message body of the request response by using a shared key to obtain message content, calculate a fourth integrity digest according to the message content and a user password, and when the fourth integrity digest is the same as a third integrity digest in the request response, verify that the request response is valid; and

the server 902, configured to receive the resource access request, obtain the third integrity digest by performing calculation by using a second message-digest algorithm according to the user password and the message content and carry the third integrity digest in a second authentication header field; encrypt the message content by using the shared key and carry the message content in the message body; where the user password is obtained from a storage area of the server 902 by using the user identifier carried by the resource access request, and the message content is obtained by the server 902 after completing an operation of the resource access request; and send the request response carrying the second authentication header field and the message body to the user terminal.

A system for securely transmitting data provided by the present invention includes:

a user terminal 1001, configured to send a resource access request carrying a first authentication header field and a message body, where the first authentication header field includes a user identifier, a server identifier, and a first integrity digest, where the first integrity digest is obtained by performing calculation by using a first message-digest algorithm according to a user password and message content; and the message body carries message content that is encrypted by using a shared key; and further configured to receive a request response returned by a server 1002; and

the server 1002, configured to receive the resource access request sent from the user terminal, decrypt the message body of the resource access request by using the shared key to obtain the message content, obtain the user password from a storage area according to the user identifier in the first authentication header field, calculate a second integrity digest by using a second message-digest algorithm according to the message content and the obtained user password, and when the second integrity digest is the same as the first integrity digest in the resource access request, verify that the resource access request is valid and return the request response to the user terminal.

In the embodiments of the present invention, the user terminal and the server include at least one processor (for example, a CPU), at least one network interface or another communications interface, a memory, and at least one communications bus for implementing connection and communication between these apparatuses. The processor is configured to execute an executable module stored in the memory, for example, a computer program. The memory may include a high speed random access memory (RAM: Random Access Memory), or may further include a non-volatile memory (non-volatile memory), for example, at least one magnetic disk memory or optical disc. A communications connection between a system gateway and at least one other network element is implemented through the at least one network interface (which may be wired or wireless), and Internet, a wide area network, a local area network, or a metropolitan area network may be used. In some implementation manners, the memory stores a program, where the program may be executed by a processor, and the program is used to execute the steps of the foregoing method embodiments.

The above are merely provided as exemplary embodiments of the present invention, but are not intended to limit the protection scope of the present invention. Any modification, equivalent replacement, and improvement made within the spirit and principle of the present invention shall all fall within the protection scope of the present invention.

**Claims**

1. A method for securely transmitting data, comprising:

sending, by a user terminal, a resource access request carrying a first authentication header field to a server, wherein the first authentication header field comprises a user identifier and a server identifier;
receiving a request response returned by the server, wherein the request response comprises a second authentication header field and a message body, wherein the second authentication header field carries a third integrity digest, wherein the third integrity digest is obtained by the server by performing, after receiving the resource access request, calculation by using a third message-digest algorithm further according to a user password and message content; and the message body carries message content that is encrypted by using a shared key; wherein the user password is obtained from a storage area of the server according to the user identifier carried by the resource access request; and

decrypting the message body of the request response by using the shared key to obtain the message content, calculating a fourth integrity digest by using a fourth message-digest algorithm according to the message content and the user password, and when the fourth integrity digest is the same as the third integrity digest in the request response, verifying that the request response is valid.

2. The method according to claim 1, wherein the first authentication header field comprises a first digest calculation parameter, wherein the first digest calculation parameter comprises the user identifier and the server identifier, and further comprises one or a combination of several of a random identifier, a resource access path, and a negotiated key parameter; and the method further comprises:

the resource access request sent by the user terminal further comprises a first integrity digest that is calculated by using a first message-digest algorithm according to the user password and one or a combination of several parameters in the first digest calculation parameter;

calculating, by the server after receiving the resource access request, a second integrity digest by using a second message-digest algorithm according to the user password of the storage area of the server and the first digest calculation parameter, wherein the first message-digest algorithm is the same as the second message-digest algorithm and when the first integrity digest is the same as the second integrity digest, the resource access request is valid.

3. The method according to claim 1 or 2, wherein the second authentication header field in the request response further comprises a second digest calculation parameter, and the second digest calculation parameter specifically comprises one or a combination of several of a user identifier, a random identifier, a resource access path, a server identifier, and a negotiated key parameter;

the calculating the third integrity digest by using the third message-digest algorithm according to the user password and the message content specifically comprises: obtaining the third integrity digest by performing calculation by using the third message-digest algorithm according to the user password, the message content, and the second digest calculation parameter; and the calculating the fourth integrity digest by using the fourth message-digest algorithm according to the message content and the user password specifically comprises: obtaining the fourth integrity digest by performing calculation by using the fourth message-digest algorithm according to the user password, the message content, and the second digest calculation parameter, wherein the fourth message-digest algorithm is the same as the third message-digest algorithm.

4. The method according to claim 3, wherein the resource access request further comprises the random identifier;

the sending, by the user terminal, the resource access request specifically comprises: sending the resource access request carrying the random identifier, wherein the random identifier is generated and stored by the user terminal and is carried in the first digest calculation parameter; and

the receiving the request response returned by the server further comprises that the second digest calculation parameter of the request response comprises a random identifier; and

the method further comprises verifying, by the user terminal, that the stored random identifier is the same as the random identifier in the third digest calculation parameter carried by the request response, indicating that the request response is not repeatedly sent.

5. The method according to claim 2 or 3, wherein the first digest calculation parameter further comprises a first resource version; and

the calculating the first integrity digest by using the first message-digest algorithm according to the user password and one or a combination of several parameters in the first digest calculation parameter further comprises: further calculating the first integrity digest by using the first resource version in the first digest calculation parameter, and sending a resource access request carrying the first resource version; and

the method further comprises: comparing, by the server after receiving the resource access request, whether the first resource version is the same as a second resource version stored locally on the server, where if they are the same, the resource access request is not repeatedly sent; and

the calculating the second integrity digest by using the second message-digest algorithm according to the user password of the storage area of the server and the first digest calculation parameter further comprises: further calculating the second integrity digest by using the first resource version and verifying that the resource access request is valid.

6. The method according to claim 5, wherein the method further comprises:

if the first resource version carried by the resource access request turns out to be different from the second resource version stored locally on the server, and the first integrity digest and the second integrity digest have the same verification result, further calculating, by the server, the third integrity digest by using the second resource version, further carrying the second resource version in the request response, and sending the request response to the user terminal.

7. The method according to any one of claims 1 to 6, wherein
the shared key used by the user terminal is generated by the user terminal by using a message-digest algorithm of a key according to the user identifier and the user password; and
the server queries a stored user password according to the user identifier carried in the resource access request, and further calculates and generates a shared key used by the server by using the message-digest algorithm of a key according to the user identifier and the user password.

8. The method according to any one of claims 1 to 6, wherein
the shared key used by the server is obtained by performing calculation according to the negotiated key parameter; and the shared key used by the user terminal is obtained by performing calculation according to the negotiated key parameter carried in the request response.

9. The method according to any one of claims 1 to 8, wherein the sending, by the user terminal, the resource access request carrying the first authentication header field to the server further comprises:

acting as a proxy to receive the resource access request, obtain, according to the user identifier and the server identifier in the resource access request, a protocol supported by the user terminal and the server, complete protocol conversion of the resource access request to generate a resource access request that supports a protocol supported by the server, and send the converted resource access request to the server.

10. The method according to any one of claims 1 to 9, wherein the receiving the request response returned by the server further comprises:

acting as a proxy to receive the request response, complete protocol conversion of the request response according to the user identifier and the server identifier in the request response to generate a request response that supports the protocol supported by the user terminal, and send the converted request response to the user terminal.

11. A method for securely transmitting data, comprising:

sending, by a user terminal, a resource access request carrying a first authentication header field and a message body, wherein the first authentication header field comprises a user identifier, a server identifier, and a first integrity digest, wherein the first integrity digest is obtained by the user terminal by performing calculation by using a first message-digest algorithm according to a user password and message content; and the message body carries message content that is encrypted by using a shared key; and
receiving a request response returned by a server, wherein the request response is returned by the server after receiving the resource access request and verifying that the resource access request is valid, wherein the verifying that the resource access request is valid specifically comprises: decrypting the message body of the resource access request by using the shared key to obtain the message content, obtaining a corresponding user password from a storage area according to the user identifier in the first authentication header field, calculating a second integrity digest by using a second message-digest algorithm according to the message content and the obtained user password, and when the second integrity digest is the same as the first integrity digest in the resource access request, verifying that the resource access request is valid.

12. The method according to claim 11, wherein the request response comprises a second authentication header field, and the second authentication header field further comprises a second digest calculation parameter, wherein the second digest calculation parameter specifically comprises one or a combination of several of a user identifier, a random identifier, a resource access path, a server identifier, and a negotiated key parameter; and the method further comprises:

> receiving, by the user terminal, a request response carrying a third integrity digest, wherein the third integrity digest is obtained by performing calculation by using a third message-digest algorithm according to the user password and the second digest calculation parameter; and
> obtaining, by the user terminal after receiving the request response, a fourth integrity digest by performing calculation by using a fourth message-digest algorithm according to the user password and the second digest calculation parameter, wherein the fourth message-digest algorithm is the same as the third message-digest algorithm, and when the third integrity digest is the same as the fourth integrity digest, the request response is valid.

13. The method according to claim 11 or 12, wherein the first authentication header field comprises a first digest calculation parameter, the first digest calculation parameter comprises the user identifier and the server identifier, and further comprises one or a combination of several of a random identifier, a resource access path, and a negotiated key parameter; and
that the first integrity digest is obtained by the user terminal by performing calculation by using a first message-digest algorithm according to a user password and message content specifically comprises: the first integrity digest is obtained by the user terminal by performing calculation by using the first message-digest algorithm according to the user password, the message content, and the first digest calculation parameter; and
the calculating a second integrity digest by using a second message-digest algorithm according to the message content and the user password specifically comprises: calculating the second integrity digest by using the second message-digest algorithm according to the obtained message content, the user password, and the first digest calculation parameter, wherein the first message-digest algorithm is the same as the second message-digest algorithm.

14. The method according to claim 13, wherein the resource access request further comprises the random identifier;
the sending, by the user terminal, the resource access request specifically comprises: sending the resource access request carrying the random identifier, wherein the random identifier is generated and stored by the user terminal and is carried in the first digest calculation parameter; and
the receiving the request response returned by the server further comprises that the second digest calculation parameter of the request response comprises a random identifier; and
the method further comprises verifying, by the user terminal, that the stored random identifier is the same as the random identifier in the second digest calculation parameter carried by the request response, indicating that the request response is not repeatedly sent.

15. The method according to claim 13 or 14, wherein the first digest calculation parameter comprises a first resource version; and
that the first integrity digest is obtained by the user terminal by performing calculation by using a first message-digest algorithm according to a user password and message content comprises: further calculating, by the user terminal, the first integrity digest by using the first resource version in the first digest calculation parameter, and sending a resource access request carrying the first resource version; and
the method further comprises: comparing, by the server after receiving the resource access request, whether the first resource version is the same as a second resource version stored locally on the server, where if they are the same, the resource access request is not repeatedly sent;
the calculating, by the server, the third integrity digest specifically comprises: completing an operation of the resource access request, updating the second resource version to a third resource version, further calculating the third integrity digest by using the third resource version, and sending a request response carrying the third resource version and the third integrity digest to the user terminal; and
the obtaining a fourth integrity digest by performing calculation by using a fourth message-digest algorithm according to the user password and the second digest calculation parameter comprises: further calculating, by the user terminal, the fourth integrity digest by using the third resource version carried in the received request response, and when it is verified that the fourth integrity digest is the same as the third integrity digest carried in the request response, storing the third resource version.

16. The method according to claim 15, wherein the method further comprises:

if the first resource version carried by the resource access request turns out to be different from the second resource version stored locally on the server, and the first integrity digest and the second integrity digest have the same verification result, further calculating, by the server, the third integrity digest by using the second resource version, further carrying the second resource version in the request response, and sending the request response to the user terminal.

17. The method according to any one of claims 11 to 16, wherein
the shared key used by the user terminal is generated by the user terminal by using a message-digest algorithm of a key according to the user identifier and the user password; and
the server queries a stored user password according to the user identifier carried in the resource access request, and further calculates and generates a shared key used by the server by using the message-digest algorithm of a key according to the user identifier and the user password.

18. The method according to any one of claims 11 to 16, wherein
the shared key used by the server is obtained by performing calculation according to the negotiated key parameter; and the shared key used by the user terminal is obtained by performing calculation according to the negotiated key parameter carried in the request response.

19. The method according to any one of claims 11 to 18, wherein the sending, by the user terminal, the resource access request carrying the first authentication header field to the server specifically comprises:

acting as a proxy to receive the resource access request, obtain, according to the user identifier and the server identifier in the resource access request, a protocol supported by the user terminal and the server, complete protocol conversion of the resource access request to generate a resource access request that supports a protocol supported by the server, and send the converted resource access request to the server.

20. The method according to any one of claims 11 to 19, wherein the receiving the request response returned by the server specifically comprises:

acting as a proxy to receive the request response, complete protocol conversion of the request response according to the user identifier and the server identifier in the request response to generate a request response that supports the protocol supported by the user terminal, and send the converted request response to the user terminal.

21. A user terminal, comprising:

a first sending module, configured to send a resource access request carrying a first authentication header field to a server, wherein the first authentication header field carries a user identifier and a server identifier;
a first receiving module, configured to receive a request response returned by the server and transmit the request response to a first verifying module, wherein the request response comprises a second authentication header field and a message body, wherein the second authentication header field carries a third integrity digest, and the third integrity digest is obtained by the server by performing, after receiving the resource access request, calculation by using a third message-digest algorithm further according to a user password and message content; and the message body carries message content that is encrypted by using a shared key; wherein the user password is obtained from a storage area of the server according to the user identifier carried by the resource access request; and
the first verifying module, configured to generate the resource access request and transmit the resource access request to the first sending module, and further configured to obtain the request response from the first receiving module, decrypt the message body of the request response by using the shared key to obtain the message content, calculate a fourth integrity digest by using a fourth message-digest algorithm according to the message content and the user password, and when the fourth integrity digest is the same as the third integrity digest in the request response, verify that the request response is valid.

22. The terminal according to claim 21, wherein the first authentication header field carried by the resource access request further comprises a first digest calculation parameter, wherein the first digest calculation parameter comprises the user identifier and the server identifier, and further comprises one or a combination of several of a random identifier, a resource access path, and a negotiated key parameter; and
the first verifying module is further configured to calculate a first integrity digest by using a first message-digest algorithm according to the user password and the first digest calculation parameter, and carry the first integrity digest in the resource access request, so that the server can calculate a second integrity digest by using a second message-digest algorithm according to the user password and the first digest calculation parameter, wherein the first message-digest algorithm is the same as the second message-digest algorithm; and when the first integrity digest is the same as the second integrity digest, verify that the resource access request is valid.

23. The terminal according to claim 21 or 22, wherein the second authentication header field further comprises a second digest calculation parameter, the second digest calculation parameter specifically comprises one or a combination of several of the user identifier, a random identifier, a resource access path, a server identifier, and a negotiated key parameter; and
the first verifying module is further configured to calculate the fourth integrity digest by using the fourth message-digest algorithm according to the user password, the message content, and the second digest calculation parameter.

24. The terminal according to claim 23, wherein the resource access request further carries the random identifier, and the first verifying module is further configured to transmit the resource access request carrying the random identifier to the first sending module, and store the random identifier; and when receiving the request response from the first receiving module, verify whether the stored random identifier is the same as the random identifier in the second digest calculation parameter carried by the request response, and if they are the same, verify that the request response is not repeatedly sent.

25. A server, comprising:

a second receiving module, configured to receive a resource access request sent from a user terminal and transmit the resource access request to a second verifying module, wherein the resource access request carries a user identifier and a server identifier;
the second verifying module, configured to obtain a user password from a storage area of the server according to the user identifier in the resource access request, calculate a third integrity digest by using a third message-digest algorithm according to the user password and message content, and transmit a request response carrying a second authentication header field and a message body to a second sending module, wherein the second authentication header field comprises the third integrity digest, and the message body comprises message content that is encrypted by using a shared key; and
the second sending module, configured to send the request response from the second verifying module to the user terminal.

26. The server according to claim 25, wherein the first authentication header field carried by the resource access request further comprises a first digest calculation parameter, and the first digest calculation parameter comprises the user identifier and the server identifier, and further comprises one or a combination of several of a random identifier, a resource access path, and a negotiated key parameter; and
the second verifying module is further configured to calculate a second integrity digest by using a second message-digest algorithm according to the user password and the first digest calculation parameter, and when the first integrity digest in the resource access request is the same as the second integrity digest, verify that the resource access request is valid.

27. The server according to claim 26, wherein the second authentication header field in the request response further comprises a second digest calculation parameter, and the second digest calculation parameter specifically comprises one or a combination of several of a user identifier, a random identifier, a resource access path, a server identifier, and a negotiated key parameter; and
the second verifying module is further configured to calculate the third integrity digest by using the third message-digest algorithm according to the user password, the message content, and the second digest calculation parameter.

28. The server according to claim 26 or 27, wherein when the first digest calculation parameter further comprises a first resource version,
the second verifying module is further configured to compare whether the first resource version is the same as a second resource version stored locally on the server, where if they are the same, the resource access request is not repeatedly sent; and after it is verified that the resource access request is valid, transmit the request response to the second sending module, wherein the request response further carries the first resource version.

29. A user terminal, comprising:

a third sending module, configured to send a resource access request from a third verifying module, wherein the resource access request carries a first authentication header field and a message body, and the first authentication header field carries a user identifier, a server identifier, and a first integrity digest;

the third verifying module, configured to obtain a first integrity digest by performing calculation by using a first message-digest algorithm according to a user password and message content, carry the first integrity digest in the first authentication header field, encrypt the message content by using a shared key, carry the message content in the message body, and send the resource access request carrying the first authentication header field and the message body to the third sending module; and

a third receiving module, configured to receive and transmit a request response returned by a server to the third verifying module.

30. The terminal according to claim 29, wherein the request response comprises a second authentication header field, and the second authentication header field further comprises a second digest calculation parameter, wherein the second digest calculation parameter specifically comprises one or a combination of several of a user identifier, a random identifier, a resource access path, a server identifier, and a negotiated key parameter; and

the third verifying module is further configured to: after receiving the request response, obtain a fourth integrity digest by performing calculation according to a fourth message-digest algorithm, and when a third integrity digest in the request response is the same as the fourth integrity digest, verify that the request response is valid.

31. The terminal according to claim 29 or 30, wherein the first authentication header field further comprises a first digest calculation parameter, wherein the first digest calculation parameter comprises the user identifier and the server identifier, and further comprises one or a combination of several of a random identifier, a resource access path, and a negotiated key parameter; and

the third verifying module is further configured to obtain the first integrity digest by performing calculation by using the first message-digest algorithm according to the user password, the message content, and the first digest calculation parameter, and carry the first integrity digest in the resource access request, so that the server further, after receiving the resource access request carrying the first integrity digest, calculates a second integrity digest by using the user password, the message content, and the first digest calculation parameter and by using a second message-digest algorithm, wherein the first message-digest algorithm is the same as the second message-digest algorithm; and when the first integrity digest is the same as the second integrity digest, verifies that the resource access request is valid.

32. The terminal according to claim 31, wherein

the third verifying module is further configured to generate and store a random identifier, and further receive a request response that is from the server and forwarded by the third receiving module, wherein the random identifier in the second digest calculation parameter in the request response is obtained from the first digest calculation parameter; and

the third verifying module verifies that the stored random identifier is the same as the random identifier in the second digest calculation parameter carried by the request response, indicating that the request response is not repeatedly sent.

33. The terminal according to claim 31 or 32, wherein the first digest calculation parameter further comprises a first resource version;

the third verifying module further calculates the first integrity digest by using the first resource version of the first digest calculation parameter, wherein an initial value of the first resource version is returned by the server to the user terminal after a resource is successfully created; and

the third verifying module stores, when it is verified that the request response is valid, a third resource version carried in the request response returned by the server.

34. A server, comprising:

a fourth receiving module, configured to receive a resource access request sent from a user terminal, and transmit the resource access request to a fourth verifying module, wherein the resource access request comprises a first authentication header field, and the first authentication header field carries a user identifier, a server identifier, a message body, and a first integrity digest;

the fourth verifying module, configured to: after obtaining the resource access request from the fourth receiving module, obtain message content that is encrypted by the user terminal and carried in the resource access request, decrypt the message body of the resource access request by using a shared key to obtain the message content, obtain a user password from a storage area according to the user identifier in the first authentication header field, and calculate a second integrity digest by using a second message-digest algorithm according to the message content and the obtained user password; and when the second integrity digest is the same as the first integrity digest in the resource access request, verify that the resource access request is valid and transmit a request response to a fourth sending module; and

the fourth sending module, configured to send the request response from the fourth verifying module to the user terminal.

35. The server according to claim 34, wherein the first authentication header field carried by the resource access request further comprises a first digest calculation parameter, wherein the first digest calculation parameter comprises the user identifier and the server identifier, and further comprises one or a combination of several of a random identifier, a resource access path, and a negotiated key parameter; and

the fourth verifying module is further configured to calculate the second integrity digest by using the second message-digest algorithm according to the message content, the user password, and the first digest calculation parameter, and when the first integrity digest is the same as the second integrity digest, verify that the resource access request is valid, wherein the first message-digest algorithm is the same as the second message-digest algorithm.

36. The server according to claim 34 or 35, wherein the request response carries a second authentication header field, and the second authentication header field further comprises a second digest calculation parameter, wherein the second digest calculation parameter specifically comprises one or a combination of several of a user identifier a random identifier, a resource access path, a server identifier, and a negotiated key parameter; and

the fourth verifying module is further configured to calculate a third integrity digest by using a third message-digest algorithm according to the user password and the second digest calculation parameter, and carry the third integrity digest in the request response, so that the user terminal may calculate a fourth integrity digest by using a fourth message-digest algorithm according to the user password and the second digest calculation parameter, and when the fourth integrity digest is the same as the third integrity digest, verify that the request response is valid.

37. The server according to claim 36, wherein when the first digest calculation parameter further carries a first resource version,

the fourth verifying module is further configured to compare whether the first resource version is the same as a second resource version stored locally on the server, and if they are the same, the resource access request is not repeatedly sent; and after it is verified that the resource access request is valid, complete an operation of the resource access request, update the second resource version to a third resource version, and further calculate the third integrity digest by using the third resource version.

38. A system for securely transmitting data, comprising:

a user terminal, configured to send a resource access request carrying a first authentication header field to a server, wherein the first authentication header field comprises a user identifier and a server identifier; and further configured to receive a request response and decrypt a message body of the request response by using a shared key to obtain message content, calculate a fourth integrity digest according to the message content and a user password, and when the fourth integrity digest is the same as a third integrity digest in the request response, verify that the request response is valid; and

the server, configured to receive the resource access request, obtain the third integrity digest by performing calculation by using a third message-digest algorithm according to the user password and the message content and carry the third integrity digest in a second authentication header field; encrypt the message content by using the shared key and carry the message content in the message body; wherein the user password is obtained from a storage area of the server by using the user identifier carried by the resource access request, and the message content is obtained by the server after completing an operation of the resource access request; and send the request response carrying the second authentication header field and the message body to the user terminal.

39. The system according to claim 38, further comprising a proxy apparatus, wherein the proxy apparatus is configured to receive the resource access request from the user terminal, obtain, according to the user identifier and the server identifier in the resource access request, a protocol supported by the user terminal and the server, complete protocol conversion of the resource access request to generate a resource access request that supports a protocol supported by the server, and send the converted resource access request to the server; and

the proxy apparatus is further configured to receive the request response from the server, complete protocol conversion of the request response according to the user identifier and the server identifier in the request response to generate a request response that supports the protocol supported by the user terminal, and send the converted request response to the user terminal.

40. A system for securely transmitting data, comprising:

a user terminal, configured to send a resource access request carrying a first authentication header field and a message body, wherein the first authentication header field comprises a user identifier, a server identifier, and a first integrity digest, wherein the first integrity digest is obtained by the user terminal by performing calculation by using a first message-digest algorithm according to a user password and message content; and the message body carries message content that is encrypted by using a shared key; and further configured to receive a request response returned by a server; and
the server, configured to receive the resource access request sent from the user terminal, decrypt the message body of the resource access request by using the shared key to obtain the message content, obtain the user password from a storage area according to the user identifier in the first authentication header field, calculate a second integrity digest by using a second message-digest algorithm according to the message content and the obtained user password, and when the second integrity digest is the same as the first integrity digest in the resource access request, verify that the resource access request is valid and return the request response to the user terminal.

41. The system according to claim 40, further comprising a proxy apparatus, wherein the proxy apparatus is configured to receive the resource access request from the user terminal, obtain, according to the user identifier and the server identifier in the resource access request, a protocol supported by the user terminal and the server, complete protocol conversion of the resource access request to generate a resource access request that supports a protocol supported by the server, and send the converted resource access request to the server; and
the proxy apparatus receives the request response from the server, completes protocol conversion of the request response according to the user identifier and the server identifier in the request response to generate a request response that supports the protocol supported by the user terminal, and sends the converted request response to the user terminal.

A user terminal sends a resource access request carrying a first authentication header field to a server    S1001

Receive a request response returned by the server, where the request response includes a second authentication header field and a message body, and the second authentication header field carries a third integrity digest    S1002

Decrypt the message body of the request response by using a shared key to obtain message content, calculate a fourth integrity digest by using a fourth message-digest algorithm according to the message content and a user password, and when the fourth integrity digest is consistent with the third integrity digest in the request response, verify that the request response is valid    S1003

FIG. 1a

A user terminal sends a resource access request carrying a first authentication header field and a message body    S2001

Receive a request response returned by a server, where the request response is returned by the server after receiving the resource access request and verifying that the resource access request is valid    S2002

FIG. 1b

CoAP protocol                    HTTP protocol

| User terminal | | Proxy | | Server |

S201
GET request of CoAP protocol

S202
GET request of HTTP protocol

S203

S204
200 OK of HTTP protocol

S205
2.05 response of CoAP protocol

FIG. 2

CoAP protocol                              HTTP protocol

| User terminal | | Proxy | | Server |

S301
PUT request of CoAP protocol
S302
PUT request of HTTP protocol

S303

S304
401 response of HTTP response

S305
4.01 response of CoAP protocol

S306
PUT request of CoAP protocol
S307
PUT request of HTTP protocol

S308

S309
200 OK response of HTTP protocol

S310
2.04 response of CoAP protocol

FIG. 3

CoAP protocol              HTTP protocol

User terminal         Proxy         Server

S401
POST request of CoAP protocol

S402
POST request of HTTP protocol

S404
4.01 response of CoAP protocol

S403
401 response of HTTP

S405
POST request of CoAP protocol

S406
POST request of HTTP protocol

S408
200 OK response of HTTP protocol

S407

S409
2.01 response of CoAP protocol

FIG. 4

First sending module    501

First verifying module    503

First receiving module    502

FIG. 5

Second sending
module — 603

↑

Second verifying
module — 602

↑

Second receiving
module — 601

FIG. 6

Third sending
module — 701

↑

Third verifying
module — 702

↑

Third receiving
module — 703

FIG. 7

Fourth sending module — 803

Fourth verifying module — 802

Fourth receiving module — 801

FIG. 8

User terminal — 901

Server — 902

FIG. 9

User terminal — 1001

Proxy — 1003

Server — 1002

FIG. 10

<table>
<tr><td colspan="3" align="center">**INTERNATIONAL SEARCH REPORT**</td><td>International application No.<br><br>PCT/CN2012/086753</td></tr>
</table>

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04L; H04W; G06F

Documentation searched other than minimum documentation to the extent that such documents are included in the fields searched

Electronic data base consulted during the international search (name of data base and, where practicable, search terms used)

VEN, CPRSABS, CNKI: COAP, M2M, safety, security, data, transmit+, user, terminal, server, resource, access, request, head, field, zone, ID, identification, extract, brief, key, password, certificat+, authenti+, valid

**C. DOCUMENTS CONSIDERED TO BE RELEVANT**

| Category* | Citation of document, with indication, where appropriate, of the relevant passages | Relevant to claim No. |
|---|---|---|
| A | CN 102195957 A (HUAWEI TECH CO LTD) 21 September 2011 (21.09.2011) the whole document | 1-41 |
| A | CN 101350820 A (ZTE CORP.) 21 January 2009 (21.01.2009) the whole document | 1-41 |
| A | CN 1820481 A (IBM) 16 August 2006 (16.08.2006) the whole document | 1-41 |
| A | CN 102014129 A ((HUAWEI TECH CO LTD) 13 April 2011 (13.04.2011) the whole document | 1-41 |
| A | US 2010077463 A (DISNEY ENTERPRISES INC.) 25 March 2010 (25.03.2010) the whole document | 1-41 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 February 2013 (02.02.2013) | 21 March 2013 (21.03.2013) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019451 | Authorized officer<br><br>WANG, Guixia<br><br>Telephone No. (86-10)62411262 |

Form PCT/ISA /210 (second sheet) (July 2009)

## INTERNATIONAL SEARCH REPORT
### Information on patent family members

International application No.

PCT/CN2012/086753

| Patent Documents referred in the Report | Publication Date | Patent Family | Publication Date |
|---|---|---|---|
| CN 102195957 A | 21.09.2011 | None | |
| CN 101350820 A | 21.01.2009 | None | |
| CN 1820481 A | 16.08.2006 | TW 200509641 A | 01.03.2005 |
| | | CN 182048 B | 05.05.2010 |
| | | TW I322609 B | 21.03.2010 |
| | | US 2006264202 A1 | 23.11.2006 |
| | | JP 2009514050 A | 02.04.2009 |
| | | WO 2005006703 A3 | 24.03.2005 |
| | | DE 602004012870 D1 | 15.05.2008 |
| | | KR 100856674 B1 | 04.09.2008 |
| | | KR 20060040661 A | 10.05.2006 |
| | | EP 1654852 B1 | 02.04.2008 |
| | | DE 602004012870 T2 | 14.05.2009 |
| | | WO 2005006703 A2 | 20.01.2005 |
| | | EP 1654852 A2 | 10.05.2006 |
| CN 102014129 A | 13.04.2011 | WO 2012068835 A1 | 31.05.2012 |
| US 2010077463 A | 25.03.2010 | KR 1127194 B1 | 29.03.2012 |
| | | KR 20100034716 A | 01.04.2010 |
| | | EP 2169578 A2 | 31.03.2010 |
| | | JP 2010079902 A | 08.04.2010 |

Form PCT/ISA /210 (patent family annex) (July 2009)

## INTERNATIONAL SEARCH REPORT

International application No.

PCT/CN2012/086753

**Continue of second sheet :   A.   CLASSIFICATION OF SUBJECT MATTER**

H04L 9/14 (2006.01) i

H04L 29/06 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110421295